# EUROPÄISCHE PATENTSCHRIFT

(11) **EP 0 834 447 B1**
(45) Veröffentlichungstag und Bekanntmachung des Hinweises auf die Patenterteilung: **03.07.2002**
(21) Anmeldenummer: 97116755.6
(22) Anmeldetag: 26.09.1997
(51) Int. Cl.: B62K 21/18, B62K 21/06, B62K 21/24

(54) **Lenker-/Gabelbaugruppe**
Handlebar and fork assembly
assemblage comprenant une fourche et un guidon

(30) Priorität: 01.10.1996 DE 19640613; 24.05.1997 DE 19721782
(43) Veröffentlichungstag der Anmeldung: 08.04.1998
(73) Patentinhaber: Schulz, Markus, 66131 Saarbrücken (DE)
(72) Erfinder: Weber, Wolfgang, 66119 Saarbrücken (DE)
(74) Vertreter: Bernhardt, Winfrid, Dr.-Ing.

(56) Entgegenhaltungen:
- FR-A- 2 379 423
- NL-C- 129 170
- US-A- 5 454 281

## Beschreibung

Die Erfindung betrifft eine Lenker-/Gabelbaugruppe für ein insbesondere zweirädriges Fahrzeug, vor allem für ein Fahrrad, mit einem Klemmstück, das einen Klemmabschnitt für die Herstellung einer Klemmverbindung zwischen dem Schaft der Gabel und dem Schaft eines Lenkers umfasst.

Bekanntermaßen erfolgt die Befestigung von Fahrradlenkem häufig über ein kegelstumpfförmiges Bauteil, das ein zentrales Innengewinde für den Eingriff einer Spindelschraube mit einem am Lenkervorbau von außen zugänglichen Schraubenkopf aufweist. Durch Drehung des Schraubenkopfes kann das kegelstumpfförmige Bauteil unter Herstellung einer Klemmverbindung zwischen dem Gabelschaft und dem in den Gabelschaft eingeführten Lenkerschaft hergestellt werden, indem das kegelstumpfförmige Bauteil unter Aufweitung des Lenkerschafts in den Lenkerschaft hineingezogen wird. Nachteilig ist zur Höheneinstellung des Fahrradlenkers immer ein Werkzeug erforderlich, und die Verstellbereiche sind gering. Ferner sind Anpassungen von speziellen Lenkern und Vorbauten nur mit großem Arbeitsaufwand durchführbar.

Aus der DE-PS 36 26 477 ist eine höhenverstellbare Lenkstange bekannt, die in einem Vorbau einer Lenksäule gehalten ist, wobei die Lenksäule in den Gabelschaft des Fahrradrahmens eingreift und dort arretierbar ist, und wobei eine Höhenverstellung der Lenkstange durch eine mit der Lenksäule verbundene Hilfslenksäule durchgeführt werden kann. Nachteilig führt diese, eine Hilfslenksäule umfassende Konstruktion zu einem Gewichtszuwachs und beeinträchtigt darüberhinaus das Aussehen des Fahrrades.

Aus der DE-PS 800 633 ist eine dreiteilige Lenkstange für Fahrräder bekannt, die aus einer mittleren, in einem Vorbau gehaltenen Strebe und zwei jeweils an deren Enden in einer Klemmvorrichtung gehaltenen U-förmigen Griffstangen besteht. Die mittlere Strebe kann mit Hilfe einer lösbaren Klemmvorrichtung auf dem Vorbau positioniert werden. Die Klemmvorrichtungen für die Griffstangen sind femer lösbar vorgesehen, so daß die Griffstangen in der Höhe verstellt werden können. Zur Höhenverstellung sind dementsprechend zwei Klemmvorrichtungen zu betätigen. Auch diese Konstruktion führt zu einer unerwünschten Steigerung des Fahrradgewichtes.

Aus der FR-PS 1 009 648 ist eine höhenverstellbare Lenkstange für Zweiräder bekannt, die in einem Vorbau einer Lenksäule gehalten ist. Die Lenksäule greift in den Gabelschaft ein und ist dort arretierbar. Eine Höhenverstellung der Lenkstange kann durch eine mit der Lenksäule verbundene, vertikal ausgerichtete Hilfslenksäule erfolgen. Diese Hilfslenksäule ist an einem Ende mit der Lenksäule über ein Gelenk und am anderen Ende an einen Ansatz des Lenkstangenhalters gekoppelt. Durch diese Konstruktion wird das Gewicht des Fahrrades erhöht und das Aussehen beeinträchtigt.

Aus der DE-OS 26 53 582 ist eine Vorrichtung zum Klemmen des Lenkerschaftes und einer Klemmgabel bekannt. Hierbei wird der obere Außenbereich eines gabelartigen Klemmstücks der Vordergabel mit einem Gewinde und drei oder vier Längsschlitzen versehen. An den mit einem Gewinde versehenen Bereich ist ein Doppelkonusring angepaßt, der einen schrägen Schlitz aufweist, welcher von oben und unten durch eine Mutter und eine Gegenmutter beaufschlagt ist. Die an ihren einander gegenüberliegenden Flächen mit konischen Ausnehmungen versehenen Muttern wirken mit dem Doppelkonusring zusammen. Wird die Gegenmutter angezogen, so wird die Klemmgabel unter Erzeugung einer Klemmanlage an den in der Klemmgabel aufgenommenen Lenkerschaft eingeschnürt. Für die Verstellung sind unterschiedliche Werkzeuge erforderlich, und der Verstellbereich ist verhältnismäßig gering.

Aus dem DE-GM 94 01 071 ist eine zwischen einem Schaffbauteil und einem Gabelrohr eines Fahrrades vorgesehene Verriegelungsvorrichtung bekannt, welche im Gabelrohr drehbar und im Kopfrohr aufgenommen ist. Das Gabelrohr weist eine Anzahl von länglichen Schlitzen an der rohrförmigen Wand unterhalb des oberen Endteils auf. Ein Schaftbauteil ist mit einem Bund versehen, der lösbar den oberen Teil des Gabelrohrs umschließt. Die Verriegelungsvorrichtung ist lösbar von dem Gabelrohr aufgenommen und besitzt ein rohrförmiges Gehäuse, das einen Boden am unteren Ende und eine Öffnung am oberen Ende aufweist. Dieses rohrförmige Gehäuse ist mit einer Anzahl von länglichen Schlitzen versehen, die in Reihe mit den länglichen Schlitzen des Gabelrohrs an der rohrförmigen Wand angeordnet sind. Eine Anzahl von Keilbauteilen ist gleitend innerhalb der Längsschlitze der rohrförmigen Wand vorgesehen. Ein Betätigungsblock weist eine Bohrung mit einem Schraubengewinde im mittleren Teil auf. Ein Abdeckbauteil ist lösbar an der Öffnung des rohrförmigen Gehäuses befestigt. Dieses Abdeckbauteil besitzt in der Mitte eine Öffnung und ist mit dem Betätigungsblock durch Drehen des Schraubbauteiles, das zwischen dem Abdeckbauteil und dem Betätigungsblock angeordnet ist, nach oben bewegbar, wobei die Keilbauteile nach außen durch die Längsschlitze des rohrförmigen Gehäuses und des Gabelrohrs getrieben und gegen die innere Wand des Bundes gedrückt werden.

Aus der DE-OS 43 44 996 ist eine Lenker-/Gabelkonstruktion für ein Fahrrad bekannt, bei der ein den Gabelschaft ringförmig umgreifendes Klemmteil oberhalb des Fahrradarmes am Rahmenschaft festgeklemmt ist. Das Klemmteil weist an seiner dem Rahmen zugewandten Seite ein Gewinde auf, auf welches ein auf einem oberen Lenkerschaftlager aufsetzender Sockelring aufschraubbar ist und dort durch Klemmung befestigt werden kann. Der Sockelring übergreift die genannte Lagerung, so daß diese vor Schmutz und Feuchtigkeit geschützt ist. Der das Lager übergreifende Bereich ist unterhalb des Klemmbereichs zur Klemmbefestigung des Sockels auf dem Gewinde angeordnet.

Aus der EP-OS 0 672 579 ist eine Vorrichtung zur Befestigung einer Fahrradlenkerbaugruppe bekannt, bei der der in einen Gabelschaft eingeführte Lenkerschaft durch eine an dessen Ende angeordnete Klemmvorrichtung mit dem Gabelrohr verklemmbar ist. Die Klemmvorrichtung ist über eine Verbindungsstange zu betätigen, welche durch einen an die Stange angelenkten Hebel mit einer Exzenteranlagefläche, die gegen ein Widerlager am Lenker anliegt, betätigt werden kann.

Eine Klemmvorrichtung der eingangs erwähnten Art ist aus der FR-PS 23 79 423 bekannt. Bei dieser bekannten Vorrichtung wird ein geschlitzter Endabschnitt des Gabelschafts unter Verwendung eines Klemmstücks mit dem in den Gabelschaft eingeführten Lenkerschaft verklemmt. Unterhalb des geschlitzten Klemmbereichs ist der Gabelschaft mit einem Gewinde versehen, auf welches ein an das obere Gabelschaftlager anliegendes Ringteil sowie eine gegen das Ringteil durch Formschluß drehgesicherte Mutter aufgeschraubt sind. Durch Lösung des Klemmstücks läßt sich der Lenkerschaft unabhängig von der Befestigung des Gabelschafts am Rahmen bewegen und damit der Lenker in seiner Höhe verstellen.

Es ist die Aufgabe der vorliegenden Erfindung, eine gegenüber diesem Stand verbesserte Klemmvorrichtung der eingangs erwähnten Art zu schaffen, die in ihrer Konstruktion vereinfacht und durch die die Montage einer Lenkergabelbaugruppe am Fahrzeugrahmen noch weiter erleichtert ist.

Die diese Aufgabe lösende Lenker-/Gabelbaugruppe nach der Erfindung ist dadurch gekennzeichnet, dass das Klemmstück der klemmvorrichtung einen weiteren Klemmabschnitt für die Herstellung einer Klemmverbindung zwischen dem Klemmstück und dem Gabelschaff aufweist, wobei der weitere Klemmabschnitt unterhalb eines zur Herstellung der Klemmverbindung zwischen den Schäften verformbaren Abschnitts des Gabelschafts angeordnet ist.

Durch diese Erfindungslösung läßt sich eine Lenker-/Gabelbaugruppe am Rahmen mit Hilfe eines einzigen, sowohl die Verbindung des Lenkers mit der Gabel als auch die Verbindung der gesamten Baugruppe mit dem Fahrzeugrahmen gewährleistendes Teil herstellen.

In einer bevorzugten Ausführungsform der Erfindung ist die Klemmverbindung zwischen den Schäften in einem geschlitzten Endabschnitt herstellbar. Entsprechend dieser Ausführungsform kann der Lenkerschaft weit in den Gabelschaft hineingeführt sein, so daß zur Verstellung der Lenkerhöhe ein entsprechend großer Einstellbereich zur Verfügung steht.

In einer besonders bevorzugten Ausführungsform der Erfindung ist ferner vorgesehen, daß das Klemmstück einen mit dem Lenkerschaft in Formschlußeingriff stehenden Fixierabschnitt zur Drehfixierung des Lenkerschafts aufweist, wobei der Fixierabschnitt insbesondere einen den Lenkerschaft umgreifenden Hülsen- oder Ringteil mit einem radial nach innen in eine Abflachung oder Vertiefung, vorzugsweise Längsnut, des Lenkerschaftes ragenden Vorsprung umfaßt. Durch diese Maßnahme darf es bei einer Verstellung der Lenkerhöhe, bei der die Klemmverbindung zwischen den Klemmstück und dem Gabelschaft nicht gelöst zu werden braucht, vor der Wiederherstellung der Klemmverbindung zwischen dem Gabelschaft und dem Lenkerschaft keinerlei Ausrichtung des Lenkers in bezug auf die Stellung der Gabel. Mit der Wiederherstellung der Klemmverbindung zwischen den Schäften ist der Lenker in korrekter Position quer zur Laufrichtung des durch die Lenker-/Gabelbaugruppe gelenkten Rades angeordnet.

In einer weiteren bevorzugten Ausführungsform der Erfindung ist vorgesehen, daß die Klemmabschnitte jeweils einen den Gabelschaft in der Art einer geschlitzten Hülse oder geschlitzten Rings umgreifenden Klemmteil sowie seitliche, durch eine Klemmverschlußeinrichtung unter Verringerung des Hülseninnendurchmessers zusammendrückbare Spannflügel aufweist. Vorzugsweise ist das Klemmstück als einstückiges Teil, insbesondere aus einem Materialblock, hergestellt.

In weiterer vorteilhafter Ausgestaltung der Erfindung weist das Klemmstück zwischen den Klemmabschnitten eine ein gegenseitiges Übergreifen der Klemmwirkung verhindernde Materialschwächung, insbesondere eine sich wenigstens über die radiale Länge der Spannflügel erstreckende Einschlitzung, auf. Durch diese Maßnahme ist gewährleistet, daß nach einer Lösung der Verbindung der Schäfte durch den dafür vorgesehenen Klemmabschnitt der Lenkerschaft zur Verstellung der Lenkerhöhe leichtgängig innerhalb des Gabelschaftes beweglich ist.

In einer weiteren bevorzugten Ausführungsform der Erfindung weist die Klemmverschlußeinrichtung für den die Schäfte miteinander verbindenden Klemmabschnitt einen insbesondere über einen Hebel zu betätigenden Schnellverschluß auf, der darüberhinaus zweckmäßig mit einer Sicherung versehen ist, die ein ungewolltes Verdrehen des Hebels unter Verschlußöffnung verhindert.

In weiterer Ausgestaltung der Erfindung ist das Klemmstück mit einer Einrichtung zur Einstellung des Gabellagerspiels versehen, insbesondere mit einem gegen den weiteren Klemmabschnitt drehbaren Einstellring, wozu insbesondere der Klemmteil des weiteren Klemmabschnitts mit einem zum Eingriff in ein Außengewinde des Einstellrings vorgesehenen Innengewinde versehen ist, und der Einstellring eine gegen den Gabelschaft anliegende Klemmfläche aufweist und vorzugsweise zur Gewährleistung einer Klemmdeformation geschlitzt ist. Durch einen solchen Einstellring läßt sich mit geringerem Aufwand bei der Montage der Lenkerbaugruppe das Lagerspiel der Gabellagerung einstellen.

Bei der eben genannten vorzugsgemäßen Ausführungsform kann diese Einstellung dadurch erfolgen, daß die durch den weiteren Klemmabschnitt gebildete Klemmverbindung zwischen dem Klemmstück und dem Gabelschaft gelöst und der Einstellring entsprechend verdreht wird. Durch den anderen, die Klemmverbindung zwischen den Schäften herstellenden Klemmabschnitt bleibt eine für diese Einstellung erforderliche Klemmverbindung zwischen dem Klemmstück und dem Gabelschaft erhalten.

In einer weiteren bevorzugten Ausführungsform der Erfindung ist der Lenkerschaft lösbar mit einem Vorbau des Lenkers verbunden. Durch diese Maßnahme bestehen weitere Variationsmöglichkeiten der Lenkerhöhe, indem zur Verstellung der Lenkerhöhe unter Nutzung der durch das erfindungsgemäße Klemmstück ermöglichten Vereinfachung der Montage der Lenkerschaft gegen einen Lenkerschaft anderer Länge ausgetauscht wird.

Die Erfindung soll nun anhand eines Ausführungsbeispiels und der beiliegenden, sich auf dieses Ausführungsbeispiel beziehenden Zeichnungen näher erläutert und beschrieben werden. Es zeigen:
- Fig. 1: einen Teil einer Fahrradlenker-/Fahrradgabelbaugruppe mit einem Ausführungsbeispiel für eine erfindungsgemäße Klemmvorrichtung,
- Fig. 2: ein Klemmstück der in Fig. 1 gezeigten Klemmvorrichtung in einer Schnittdarstellung,
- Fig. 3: das Klemmstück von Fig. 2 in einer Seitenansicht (mit einem angeschraubten Einstellring),
- Fig. 4: das Klemmstück von Fig. 2 in einer zu der Ansicht von Fig. 3 entgegengesetzten Seitenansicht,
- Fig. 5: das Klemmstück von Fig. 2 in einer zu den Ansichten von Fig. 3 und 4 senkrechten Seitenansicht,
- Fig. 6: das Klemmstück von Fig. 2 in einer Draufsicht,
- Fig. 7: das Klemmstück von Fig. 2 in einer einen oberen Klemmabschnitt zeigenden Schnittansicht,
- Fig. 8: das Klemmstück von Fig. 2 in einer einen unteren Klemmabschnitt zeigenden Schnittansicht,
- Fig. 9: einen mit dem Klemmstück von Fig. 2 bis 8 verwendbaren Einstellring zur Einstellung des Gabellagerspiels, und
- Fig. 10: einen Abschnitt eines mit dem Klemmstück von Fig. 2 bis 8 verwendbaren Gabelschaftes mit einer Längsnut.

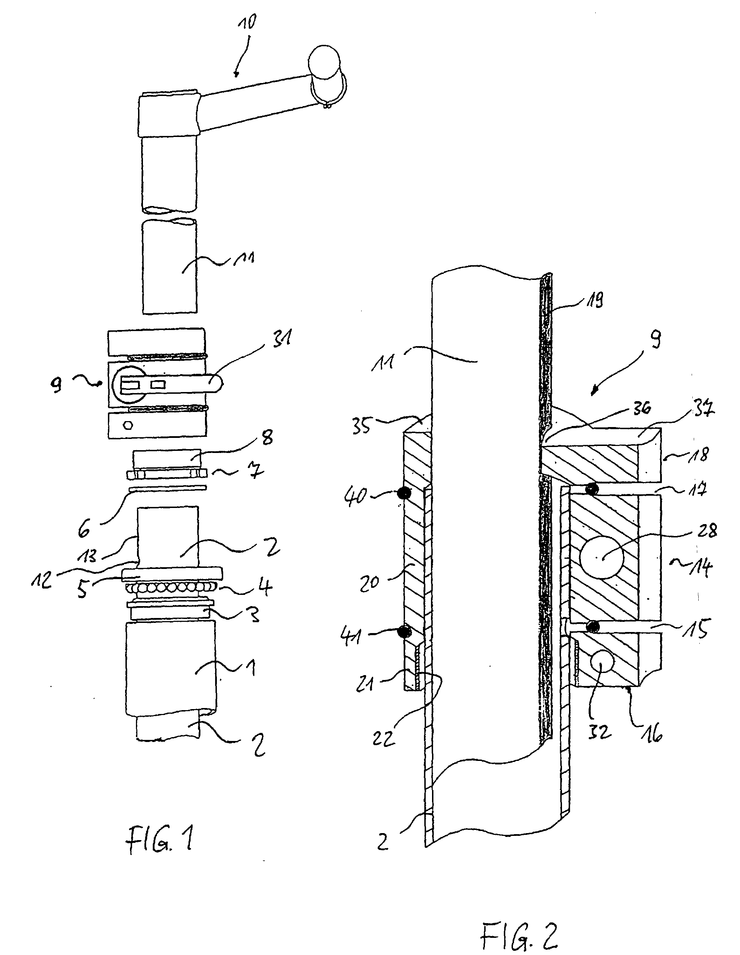

In der Explosionsdarstellung von Fig. 1 ist mit dem Bezugszeichen 1 ein Rohrteil eines Fahrradrahmens bezeichnet, durch den ein Schaft 2 einer im übrigen nicht dargestellten Fahrradgabel geführt ist.

Das Bezugszeichen 3 bezeichnet einen in das Rohrteil 1 einsetzbaren Lagerring für ein KugelLager 4. Auf das Kugellager 4 ist ein dieses abdeckender Lager- und Abdeckring 5 aufsetzbar. Mit dem Bezugszeichen 6 ist ein auf den Lager- und Abdeckring 5 aufsetzbarer Gleitring bezeichnet, welcher im montierten Zustand der gezeigten Lenker-/Gabelbaugruppe zwischen dem Lager- und Abdeckring 5 und einem Einstellring 7 zur Anordnung kommt. Der Einstellring 7 weist ein Gewinde 8 für den Gewindeeingriff in ein Klemmstück 9 auf, welches anhand der nachfolgenden Fig. 2 bis 8 noch genauer beschrieben wird.

Mit dem Bezugszeichen 10 ist in der Fig. 1 ein Lenker mit einem Lenkerschaft 11 bezeichnet. Der Lenkerschaft 11 ist über eine nicht gezeigte Spanneinrichtung lösbar mit einem Lenkervorbau 46 verbunden.

Der Gabelschaft 2 weist einen Endabschnitt mit einem in einer Bohrung 12 auslaufenden Längsschlitz 13 auf.

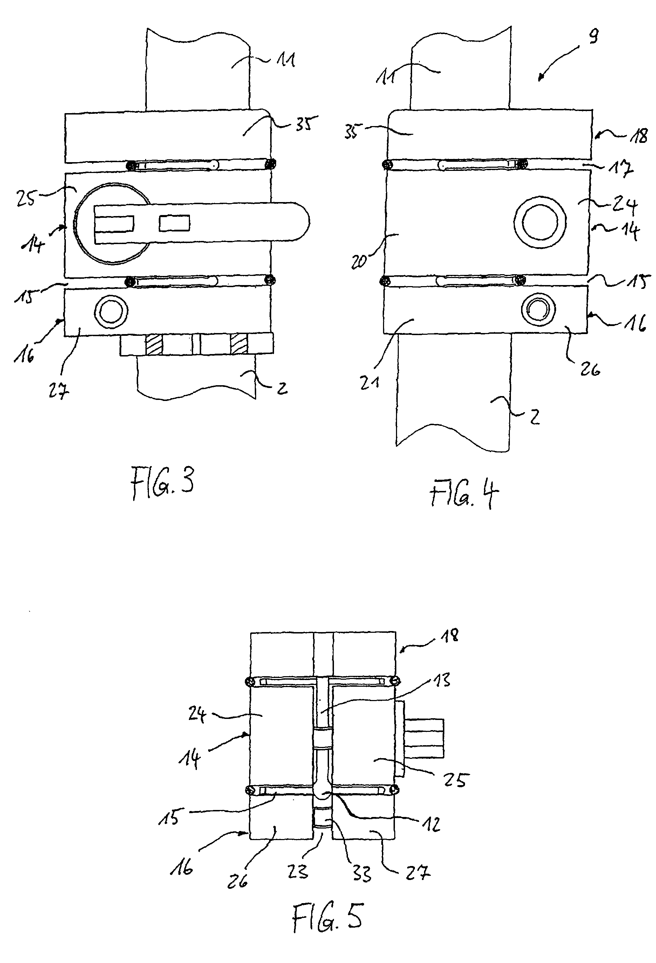

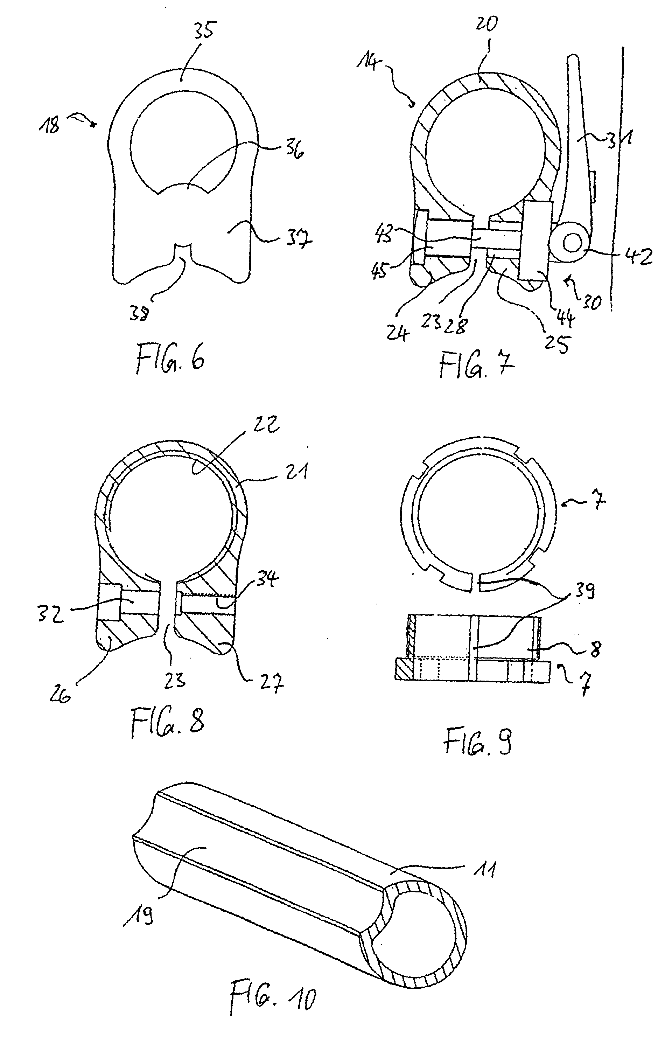

Es wird nun auf die nachfolgenden Fig. 2 bis 8 Bezug genommen, wo mit dem Bezugszeichen 14 ein erster Klemmabschnitt des Klemmstücks 9 bezeichnet ist. Der Klemmabschnitt 14 ist durch eine radiale Einschlitzung 15 von einem zweiten Klemmabschnitt 16 getrennt. Eine weitere radiale Einschlitzung 17 trennt den Klemmabschnitt 14 von einem Fixierabschnitt 18. Wie den Fig. 3 und 4 zu entnehmen ist, erstrecken sich die radialen Einschlitzungen 15 und 17 in dem gezeigten Ausführungsbeispiel über einen wesentlichen Teil der horizontalen Länge des Klemmstücks 9.

In den Darstellungen von Fig. 2 bis 4 umgreift das Klemmstück 9 mit den Klemmabschnitten 14 und 16 den Gabelschaft 2 und mit dem Fixierabschnitt 18 den Lenkerschaft 11, wobei der Lenkerschaft 11 in den Gabelschaft 2 eingeführt ist und der Gabelschaft etwa bis an den Fixierabschnitt 18 heranreicht.

Die Fixierabschnitte 14 und 16 weisen jeweils einen den Gabelschaft umfassenden Klemmteil 20 bzw. 21 auf, wobei der Klemmteil 21 des Klemmabschnitts 16 mit einem Innengewinde 22 versehen ist.

Durch einen sich über die Länge der Klemmabschnitte 14 und 16 erstreckenden, in Fig. 5 sichtbaren Längsschlitz 23 sind für den Klemmabschnitt 14 Spannflügel 24 und 25 und für den Klemmabschnitt 16 Spannflügel 26 und 27 gebildet.

Die Spannflügel 24 und 25 des Klemmabschnitts 14 weisen eine sich durch beide Spannflügel erstreckende Durchgangsbohrung 28 auf, in der Teile einer Klemmverschlußeinrichtung 30, die in dem gezeigten Ausführungsbeispiel als Schnellverschluß mit einem Verschlußhebel 31 ausgebildet ist, angeordnet sind.

Die Spannflügel 26 und 27 sind mit einer Durchgangsbohrung 32 für eine nur in Fig. 5 gezeigte Klemmschraube 33 vorgesehen, wobei der in dem Spannflügel 27 vorgesehene Teil der Durchgangsbohrung 32 mit einem Innengewinde 34 für die Klemmschraube 33 versehen ist.

Der Fixierabschnitt 18 weist einen den Lenkerschaft 11 umgreifenden Ringteil 35 auf, von dessen Innenumfang ein Vorsprung 36 in eine Längsnut 19 des Lenkerschafts 11 hineinsteht.

Ein Abschnitt des Lenkerschafts 11 mit der Längsnut 19 ist in Fig. 10 gesondert dargestellt. In Fig. 1 ist die Längsnut 19 des Lenkerschafts 11 nicht gezeigt.

An den Ringteil 35 schließt sich ein Ansatzstück 37 an, daß in der Draufsicht deckungsgleich mit den Spannflügelpaaren 24,25 und 26,27 ist. Eine zu dem Längsschlitz 23 in dem Ansatzstück vorgesehene Einschlitzung 38, die jedoch nicht bis zu dem Ringteil 35 durchgehend ist, dient zur optischen Gestaltung des Klemmteils 9.

Das Klemmstück 9 ist in dem gezeigten Ausführungsbeispiel aus einem Aluminiumblock hergestellt.

Fig. 9 zeigt gesondert den in Fig. 1 dargestellten Einstellring 7 mit dem Gewinde 8, über welches der Einstellring 7 in das Gewinde 22 des Klemmteils 21 des Klemmabschnitts 16 eingeschraubt werden kann. Wie aus der Fig. 9 hervorgeht, weist der Einstellring 7 einen Schlitz 39 auf.

Mit 40 und 41 sind Gummiringe bezeichnet, die in am Klemmstück 9 vorgesehene Nuten sowie in die Einschlitzungen 15 und 17 eingreifen. Die Gummiringe haben neben einer Dichtfunktion eine dekorative Wirkung.

Der Hebel 31 des insbesondere in Fig. 7 dargestellten Schnellverschlusses 30 weist an einer Anlenkstelle an eine Zugstange 43 eine Exzenterscheibe 42 auf, die gegen ein den Spannflügel 35 hintergreifendes, gegen die Zugstange 43 bewegliches Widerlager 44 zur Anlage kommt. Die Zugstange 43 ist mit einem den Spannflügel 24 hintergreifenden Kopfteil 45 versehen.

Zur Montage der in den Fig. 1 bis 10 dargestellten Lenker-/Gabelbaugruppe wird zunächst die Gabel mit ihrem Schaft 2 durch das Rohrteil 1 geführt und das Lager 4 mit den Lagerringen 3 und 5 sowie der Zwischenring 6 am oberen Ende des Rahmenrohrteils 1 angeordnet. Dabei steht der Gabelschaft 2 etwa über die den Klemmabschnitten 14 und 16 entsprechende Länge über die genannten Teile hinaus vor. Nun wird das Klemmstück 9 mit dem eingeschraubten Einstellring 7 auf den vorstehenden Abschnitt des Gabelschafts 2 aufgesetzt und der Klemmabschnitt 16 mit Hilfe der Klemmschraube 33 in Klemmverbindung mit dem Gabelschaft 2 unterhalb von dessen Längsschlitz 13 und deren Endbohrung 12 gebracht. Danach kann der Lenker 10 mit dem Lenkerschaft 11 1 von oben her durch den Ringteil 35 des Klemmstücks 9 in den Lenkerschaft 2 eingeschoben werden, wie dies in Fig. 2 dargestellt ist. Der in die Längsnut 19 des Lenkerschafts 11 eingreifende Vorsprung 36 sorgt für eine genaue Lagefixierung des Lenkers, sofern das Klemmstück 9 bei der Herstellung der Klemmverbindung zwischen dem Klemmabschnitt 16 und dem Gabelschaft 2 geeignet ausgerichtet worden ist. Durch die lösbare Verbindung zwischen dem Lenkerschaft 11 und dem Vorbau 46 kann darüberhinaus eine Feineinstellung der Lage des Lenkers vorgenommen werden.

Der eingeschobene Lenkerschaft kann unter Einstellung einer gewünschten Lenkerhöhe durch Betätigung der Klemmverschlußeinrichtung 30 fixiert werden, durch welchen die Spannflügel 24 und 25 unter Herstellung einer Klemmverbindung zwischen dem Lenkerschaft 11 und dem Gabelschaft 2 zusammengedrückt werden. In diesem Verschlußzustand kommt ein vorstehender Teil der Exzenterscheibe 42 zur Anlage gegen das Widerlager 44. Die Klemmverschlußeinrichtung 30 konnte mit einer Sicherung gegen ungewolltes Verdrehen des Hebels 31 versehen sein.

Durch die Herstellung der Klemmverbindung zwischen den Schäften 2,11 ist auch eine Klemmverbindung zwischen dem Klemmstück 9 und dem Gabelschaft 2 hergestellt, so daß ohne Lösung der Verbindung zwischen der Lenker-/Gabelbaugruppe und dem Rahmen die Klemmverbindung am Klemmabschnitt 16 wieder gelöst werden kann, um den Einstellring zur Einstellung des Gabellagerspiels zu verdrehen. Nach dieser Einstellung wird die Klemmverbindung zwischen dem Gabelschaft 2 und dem Klemmabschnitt 16 wieder hergestellt.

Soll nun eine Verstellung der Höhe des Lenkers erfolgen, so braucht nur über den Schnellverschluß 30 die durch den Klemmabschnitt 14 hergestellte Klemmverbindung gelöst und der Lenkerschaft 11 entsprechend verschoben zu werden, wobei die Verbindung der Gabel mit dem Rahmen und die Einstellung des Gabellagerspiels von solchen Veränderungen der Lenkerhöhe unberührt bleiben.

Die Einschlitzung 15 entkoppelt die Klemmabschnitte 14 und 16 wirksam in ihrer Klemmwirkung. Durch die Einschlitzung 17 ist gewährleistet, daß die Funktion des Klemmabschnitts 14 nicht durch den sich daran anschließenden Fixierabschnitt behindert wird.

Die vorangehend beschriebene Klemmvorrichtung gestaltet die Verwendung von Gabeln mit gewindelosen Gabelschäften. Dies ermöglicht unter anderem die Vorfertigung von Standardgabeln, deren Schäfte zur Anpassung an bestimmte Fahrradrahmen lediglich gekürzt und geschlitzt werden müssen. Der reibungsfrei über der Nut zur Anordnung kommende Schlitz bedarf dabei keinerlei Nachbearbeitung. Diese Möglichkeit zur Verwendun von Standardgabeln ist nicht zuletzt unter dem Gesichtspunkt der Lagerhaltung von Vorteil.

Durch die erweiterten Verstellmöglichkeiten, insbesondere den bequem durchführbaren Austausch des Lenkerschafts bei Verwendung eines lösbar mit dem Lenkerschaft verbundenen Lenkervorbaus, läßt sich ferner die Zahl der zur Anpassung an unterschiedliche Körpergrößen erforderlichen Fahrradrahmenvarianten reduzieren.

## Patentansprüche

1. Lenker-/Gabelbaugruppe für ein insbesondere zweirädriges Fahrzeug, vor allem für ein Fahrrad, mit einem Klemmstück (9), das einen Klemmabschnitt (14) für die Herstellung einer Klemmverbindung zwischen dem Schaft (2) der Gabel und dem Schaft (11) eines Lenkers umfaßt,
**dadurch gekennzeichnet,**
**daß** das Klemmstück (9) einen weiteren Klemmabschnitt (16) für die Herstellung einer Klemmverbindung zwischen dem Klemmstück (9) und dem Gabelschaft (2) aufweist, wobei der weitere Klemmabschnitt (16) unterhalb eines zur Herstellung der Klemmverbindung zwischen den Schäften (2,11) verformbaren Abschnitts des Gabelschafts (2) angeordnet ist.

2. Lenker-/Gabelbaugruppe nach Anspruch 1,
**dadurch gekennzeichnet, daß** der verformbare Abschnitt ein geschlitzter Endabschnitt ist.

3. Lenker-/Gabelbaugruppe nach Anspruch 1 oder 2,
**dadurch gekennzeichnet,**
**daß** zur Drehfixierung des Lenkerschafts (11) ein Formschlußeingriff zwischen dem Klemmstück (9) und dem Lenkerschaft (11) vorgesehen ist.

4. Lenker-/Gabelbaugruppe nach Anspruch 3,
**dadurch gekennzeichnet,**
**daß** der Formschlußeingriff durch einen sich an den Klemmabschnitt (14) für die Verbindung von Lenker und Gabel anschließenden Fixierabschnitt (18) des Klemmstücks (9) gebildet ist.

5. Lenker-/Gabelbaugruppe nach Anspruch 4,
**dadurch gekennzeichnet,**
**daß** der Fixierabschnitt (18) einen den Lenkerschaft (11) umgreifenden Hülsen- oder Ringteil (35) mit einer radial nach innen, in eine Abflachung oder Vertiefung (19) des Lenkerschafts (11) ragenden Vorsprung (36) umfaßt.

6. Lenker-/Gabelbaugruppe nach einem der Ansprüche 1 bis 5,
**dadurch gekennzeichnet,**
**daß** die Klemmabschnitte (14,16) jeweils einen den Gabelschaft (2) in der Art einer geschlitzten Hülse oder eines geschlitzten Rings umgreifenden Klemmteil (20,21) und seitliche, durch eine Klemmverschlußeinrichtung (30,33) unter Verringerung des Hülsenbzw. Ringinnendurchmessers zusammendrückbare Spannflügel (24,25;26,27) aufweist.

7. Lenker-/Gabelbaugruppe nach einem der Ansprüche 1 bis 6,
**dadurch gekennzeichnet,**
**daß** das Klemmstück (9) einstückig hergestellt ist.

8. Lenker-/Gabelbaugruppe nach einem der Ansprüche 1 bis 7,
**dadurch gekennzeichnet,**
**daß** das Klemmstück (9) zwischen den Klemmabschnitten (14,16) eine ein gegenseitiges Übergreifen der Klemmwirkung verhindemde Materialschwächung aufweist.

9. Lenker-/Gabelbaugruppe nach einem der Ansprüche 6 bis 8,
**dadurch gekennzeichnet,**
**daß** die Klemmverschlußeinrichtung (30) für den die Schäfte (2,11) miteinander verbindenden Klemmabschnitt (14) einen Schnellverschluß (30) aufweist.

10. Lenker-/Gabelbaugruppe nach Anspruch 9,
**dadurch gekennzeichnet,**
**dass** der Schnellverschluß über einen Hebel (31) zu betätigen ist und der Schnellverschluß eine die Verdrehung des Hebels (31) in der Verschlussstellung verhindemde Sicherung aufweist.

11. Lenker-/Gabelbaugruppe nach einem der Ansprüche 1 bis 10,
**dadurch gekennzeichnet,**
**daß** der weitere Klemmabschnitt (16) mit einer Einrichtung zur Einstellung des Gabellagerspiels versehen ist.

12. Lenker-/Gabelbaugruppe nach Anspruch 11,
**dadurch gekennzeichnet,**
**dass** die Einstelleinrichtung ein gegen den weiteren Klemmabschnitt (16) über ein Gewinde (8,22) drehbaren Einstellring (7) aufweist.

13. Lenker-/Gabelbaugruppe nach Anspruch 11 oder 12,
**dadurch gekennzeichnet,**
**daß** ein Klemmteil (21) des weiteren Klemmabschnitts (16) mit einem zum Eingriff in ein Außengewinde (8) des Einstellrings (7) vorgesehenen Innengewinde (22) versehen ist, und der Einstellring (7) eine gegen den Gabelschaft (2) anliegende Klemmfläche und zur Gewährleistung einer Klemmverformung einen Schlitz (39) aufweist.

14. Lenker-/Gabelbaugruppe nach einem der Ansprüche 1 bis 13,
**dadurch gekennzeichnet,**
**daß** der Lenkerschaft (11) lösbar mit einem Lenkervorbau (46) verbunden ist.

## Claims

1. Handlebar/fork subassembly for a two-wheeled vehicle, especially for a bicycle, having a clamping piece (9) which comprises a clamping section (14) for producing a clamping connection between the stem (2) of the fork and the stem (11) of a handlebar, **characterized in that** the clamping piece (9) has a further clamping section (16) for producing a clamping connection between the clamping piece (9) and the fork stem (2), the further clamping section (16) being arranged below a section of the fork stem (2), which section can be deformed in order to produce the clamping connection between the stems (2, 11).

2. Handlebar/fork subassembly according to Claim 1, **characterized in that** the deformable section is a slotted end section.

3. Handlebar/fork subassembly according to Claim 1 or 2, **characterized in that** a form-fitting engagement between the clamping piece (9) and the handlebar stem (11) is provided in order to rotationally fix the handlebar stem (11).

4. Handlebar/fork subassembly according to Claim 3, **characterized in that** the form-fitting engagement is formed by a fixing section (18) of the clamping piece (9), which fixing section adjoins the clamping section (14) for the connection of the handlebar and fork.

5. Handlebar/fork subassembly according to Claim 4, **characterized in that** the fixing section (18) comprises a sleeve or annular part (35) which engages around the handlebar stem (11) and has a projection (36) which protrudes radially inwards into a flattened portion or depression (19) of the handlebar stem (11).

6. Handlebar/fork subassembly according to one of Claims 1 to 5, **characterized in that** the clamping sections (14, 16) each have a clamping part (20, 21) which engages around the fork stem (2) in the manner of a slotted sleeve or a slotted ring, and lateral tensioning wings (24, 25; 26, 27) which can be pressed together by a clamping fastening device (30, 33) reducing the internal diameter of the sleeve or ring.

7. Handlebar/fork subassembly according to one of Claims 1 to 6, **characterized in that** the clamping piece (9) is produced as a single piece.

8. Handlebar/fork subassembly according to one of Claims 1 to 7, **characterized in that** the clamping piece (9) has, between the clamping sections (14, 16), a weakened area of material which prevents a mutual overlap of the clamping action.

9. Handlebar/fork subassembly according to one of Claims 6 to 8, **characterized in that** the clamping fastening device (30) has, for the clamping section (14) connecting the stems (2, 11) to each other, a quick-acting fastener (30).

10. Handlebar/fork subassembly according to Claim 9, **characterized in that** the quick-acting fastener is to be actuated via a lever (31) and the quick-acting fastener has a securing means preventing rotation of the lever (31) in the fastening position.

11. Handlebar/fork subassembly according to one of Claims 1 to 10, **characterized in that** the further clamping section (16) is provided with a device for setting the bearing clearance of the fork.

12. Handlebar/fork subassembly according to Claim 11, **characterized in that** the setting device has a setting ring (7) which can be rotated towards the further clamping section (16) via a thread (8, 22).

13. Handlebar/fork subassembly according to Claim 11 or 12, **characterized in that** a clamping part (21) of the further clamping section (16) is provided with an inner thread (22) provided for engagement in an outer thread (8) of the setting ring (7), and the setting ring (7) has a clamping surface bearing against the fork stem (2) and a slot (39) in order to ensure deformation when clamping.

14. Handlebar/fork subassembly according to one of Claims 1 to 13, **characterized in that** the handlebar stem (11) is connected releasably to a handlebar projection (46).

## Revendications

1. Assemblage comprenant un guidon et une fourche pour un véhicule en particulier à deux roues, surtout pour une bicyclette, présentant une pièce (9) de serrage, qui comprend une section (14) de serrage pour la réalisation d'un raccord par serrage entre la tige (2) de la fourche et la tige (11) d'un guidon, **caractérisé en ce que** la pièce (9) de serrage présente une autre section (16) de serrage pour la réalisation d'un raccord par serrage entre la pièce (9) de serrage et la tige (2) de la fourche, l'autre section (16) de serrage étant disposée sous une section de la tige (2) de la fourche, déformable pour réaliser le raccord par serrage entre les tiges (2, 11).

2. Assemblage comprenant un guidon et une fourche selon la revendication 1, **caractérisé en ce que** la section déformable est une section terminale fendue.

3. Assemblage comprenant un guidon et une fourche selon la revendication 1 ou 2, **caractérisé en ce que**, pour fixer la tige (11) du guidon contre la rotation, on a prévu une prise mécanique entre la pièce (9) de serrage et la tige (11) du guidon.

4. Assemblage comprenant un guidon et une fourche selon la revendication 3, **caractérisé en ce que** la prise mécanique est formée par une section de fixation (18) de la pièce (9) de serrage se raccordant à la section (14) de serrage pour le raccord du guidon et de la fourche.

5. Assemblage comprenant un guidon et une fourche selon la revendication 4, **caractérisé en ce que** la section de fixation (18) comprend une pièce (35) en douille ou annulaire entourant la tige (11) du guidon avec une partie en saillie (36) s'étendant radialement vers l'intérieur dans un aplatissement ou un creux (19) de la tige (11) du guidon.

6. Assemblage comprenant un guidon et une fourche selon l'une quelconque des revendications 1 à 5, **caractérisé en ce que** les sections (14, 16) de serrage présentent à chaque fois une partie (20, 21) de serrage entourant la tige (2) de la fourche de la manière d'une douille fendue ou d'une bague fendue et des ailettes de serrage (24, 25 ; 26, 27) latérales, pouvant être comprimées ensemble par un dispositif de fermeture par serrage (30, 33) en diminuant le diamètre intérieur de la douille ou de la bague.

7. Assemblage comprenant un guidon et une fourche selon l'une quelconque des revendications 1 à 6, **caractérisé en ce que** la pièce (9) de serrage est réalisée en une seule pièce.

8. Assemblage comprenant un guidon et une fourche selon l'une quelconque des revendications 1 à 7, **caractérisé en ce que** la pièce (9) de serrage présente, entre les sections (14, 16) de serrage, un affaiblissement de matériau empêchant un recouvrement mutuel de l'effet de serrage.

9. Assemblage comprenant un guidon et une fourche selon l'une quelconque des revendications 6 à 8, **caractérisé en ce que** le dispositif de fermeture par serrage (30) présente, pour la section (14) de serrage raccordant les tiges (2, 11) l'une avec l'autre, une fermeture rapide (30).

10. Assemblage comprenant un guidon et une fourche selon la revendication 9, **caractérisé en ce que** la fermeture rapide peut être actionnée par un levier (31) et la fermeture rapide présente une protection contre la rotation du levier (31) dans la position de fermeture.

11. Assemblage comprenant un guidon et une fourche selon l'une quelconque des revendications 1 à 10, **caractérisé en ce que** l'autre section (16) de serrage est pourvue d'un dispositif pour le réglage du jeu du palier de la fourche.

12. Assemblage comprenant un guidon et une fourche selon la revendication 11, **caractérisé en ce que** le dispositif de réglage présente une bague (11) de réglage pouvant être tournée contre l'autre section (16) de serrage via un filetage (8, 22).

13. Assemblage comprenant un guidon et une fourche selon la revendication 11 ou 12, **caractérisé en ce qu'**une partie de serrage (21) de l'autre section (16) de serrage est pourvue d'un taraudage (22) prévu pour une prise dans un filetage (8) de la bague de réglage (7) et la bague de réglage (7) présente une surface de serrage se plaçant contre la tige (2) de la fourche et une fente (39) pour garantir une déformation de serrage.

14. Assemblage comprenant un guidon et une fourche selon l'une quelconque des revendications 1 à 13, **caractérisé en ce que** la tige (11) du guidon est reliée de manière amovible avec une pièce pour guidon (46).
